(19) Europäisches Patentamt / European Patent Office / Office européen des brevets

(11) **EP 4 647 955 A1**

(12) **EUROPEAN PATENT APPLICATION**

(43) Date of publication:
**12.11.2025 Bulletin 2025/46**

(21) Application number: **24220543.3**

(22) Date of filing: **17.12.2024**

(51) International Patent Classification (IPC):
**G06F 40/109** (2020.01)    **G06V 30/10** (2022.01)
**G06V 30/148** (2022.01)    **G06V 30/244** (2022.01)
**G06V 30/414** (2022.01)    **G06V 30/416** (2022.01)
**G06V 30/19** (2022.01)    **G06V 30/146** (2022.01)

(52) Cooperative Patent Classification (CPC):
**G06V 30/148; G06F 40/109; G06V 30/10;
G06V 30/1463; G06V 30/19107; G06V 30/245;
G06V 30/414; G06V 30/416;** G06V 30/28

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.05.2024 CN 202410578897**

(71) Applicant: **Beijing Duyou Information Technology Co., Ltd.
Beijing 100085 (CN)**

(72) Inventor: **ZOU, Tao
Beijing, 100085 (CN)**

(74) Representative: **Michalski Hüttermann & Partner
Patentanwälte mbB
Kaistraße 16A
40221 Düsseldorf (DE)**

(54) **PORTABLE DOCUMENT FORMAT (PDF) DOCUMENT PROCESSING METHOD, APPARATUS, ELECTRONIC DEVICE, AND STORAGE MEDIUM**

(57)    The present disclosure provides Portable Document Format (PDF) document processing method, electronic device, and storage medium, involving fields of natural language processing and computer vision in artificial intelligence. The method includes: performing Optical Character Recognition (OCR) on a PDF document in image form to obtain recognized target results and first coordinate information for each target result, where each target result includes one character or at least two consecutive characters forming a character segment; for each target result, converting the first coordinate information into corresponding PDF coordinates and using the PDF coordinates as second coordinate information; determining a target font library for rewriting based on one or more characters in each target result; rewriting the one or more characters from each target result into the PDF document based on the second coordinate information and the target font library, to obtain a desired target document.

Performing OCR on a PDF document in image form to obtain recognized target results and first coordinate information for each target result including one character or at least two consecutive characters forming a character segment — 101

For each target result, converting the first coordinate information into corresponding PDF coordinates and using the PDF coordinates as second coordinate information — 102

Determining a target font library for rewriting based on one or more characters in each target result — 103

Rewriting the one or more characters from each target result into the PDF document based on the second coordinate information and the target font library, to obtain a desired target document — 104

**Figure 1**

## Description

### TECHNICAL FIELD

The present disclosure relates to the field of artificial intelligence, particularly to the fields of natural language processing and computer vision, and more particularly to Portable Document Format (PDF) document processing method, apparatus, electronic device, and storage medium.

### BACKGROUND

Portable Document Format (PDF) is an electronic file format that is independent of the operating system platform. Due to its platform-independent nature, PDF documents have become an ideal format for electronic document storage and dissemination, especially with the rapid development of mobile internet, and have been increasingly widely used. For scanned or photocopied PDF documents in image form, users often cannot perform operations such as copying, pasting, and click-and-drag selection as they would with regular PDF documents, which brings significant inconvenience to users.

### SUMMARY

The present disclosure provides PDF document processing method, apparatus, electronic device and storage medium.

A PDF document processing method includes:

performing Optical Character Recognition (OCR) on a PDF document in image form to obtain recognized target results and first coordinate information for each target result, which includes one character or at least two consecutive characters forming a character segment;

for each target result, converting the first coordinate information into corresponding PDF coordinates and using the PDF coordinates as second coordinate information;

determining a target font library for rewriting based on one or more characters in each target result; and

rewriting the one or more characters from each target result into the PDF document based on the second coordinate information and the target font library, to obtain a desired target document.

A PDF document processing apparatus includes: a recognition module, a conversion module, a determination module, and a rewriting module;

the recognition module is configured to perform OCR on a PDF document in image form to obtain recognized target results and first coordinate information for each target result which includes one character or at least two consecutive characters forming a character segment;

the conversion module is configured to, for each target result, convert the first coordinate information into corresponding PDF coordinates and use the PDF coordinates as second coordinate information;

the determination module is configured to determine a target font library for rewriting based on one or more characters in each target result; and

the rewriting module is configured to rewrite the one or more characters from each target result into the PDF document based on the second coordinate information and the target font library, to obtain a desired target document.

An electronic device includes: at least one processor; and a memory communicatively connected to the at least one processor; where the memory stores instructions executable by the at least one processor, the instructions, when executed by the at least one processor, enabling the at least one processor to perform the method described above.

A non-transitory computer-readable storage medium stores computer instructions, where the computer instructions, when executed by a computer, cause the computer to perform the method described above.

A computer program product, including computer program/instructions, where the computer program/instructions, when executed by a processor, implement the method described above.

It should be understood that the content described in this section is not intended to identify key or essential features of the embodiments of the present disclosure, nor is it intended to limit the scope of the present disclosure. Other features of the present disclosure will become readily apparent from the following specification.

### BRIEF DESCRIPTION OF THE DRAWINGS

The drawings are provided to better understand the present solution and are not intended to limit the present disclosure. Among them:

Figure 1 is a flowchart of a PDF document processing method according to an embodiment of the present disclosure;

Figure 2 is a schematic diagram of a click-and-drag selection operation on a target document according to the present disclosure;

Figure 3 is a schematic diagram of a page column layout according to the present disclosure;

Figure 4 is a schematic diagram of a wrap-around layout according to the present disclosure;

Figure 5 is a schematic diagram of a composition structure of a PDF document processing apparatus according to a first embodiment 500 of the present disclosure;

Figure 6 is a schematic diagram of a composition structure of a PDF document processing apparatus according to a second embodiment 600 of the present disclosure; and

Figure 7 shows a schematic block diagram of an electronic device 700 that may be used to implement the embodiments of the present disclosure.

## DETAILED DESCRIPTION OF EMBODIMENTS

The following description, combined with the drawings, provides explanations of exemplary embodiments of the present disclosure, including various details of the embodiments to aid understanding. It should be understood that these embodiments are merely exemplary. Therefore, those of ordinary skill in the art should recognize that various changes and modifications may be made to the described embodiments without departing from the scope and spirit of the present disclosure. Similarly, for clarity and brevity, the following description omits the description of well-known functions and structures.

Additionally, it should be understood that the term "and/or" in this context describes a relationship between related objects and indicates that there may be three possible relationships. For example, "A and/or B" may mean: only A exists, both A and B exist, or only B exists. Furthermore, the character "/" in this context generally indicates that the related objects on both sides are in an "or" relationship.

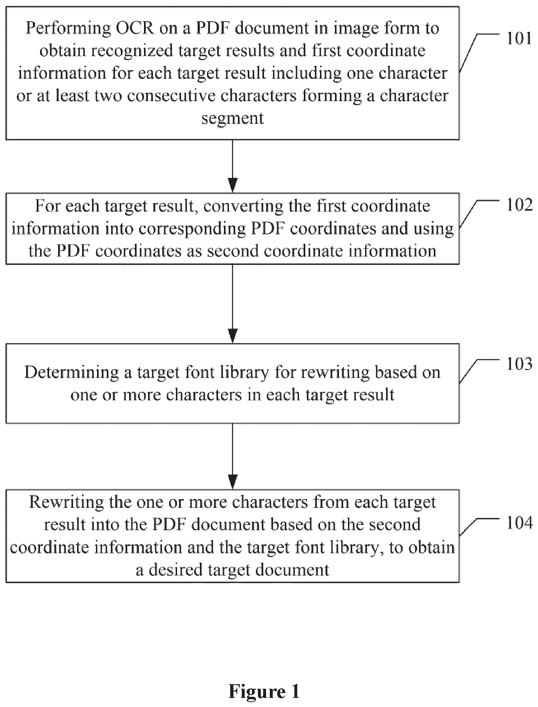

Figure 1 is a flowchart of a PDF document processing method according to an embodiment of the present disclosure. As shown in Figure 1, the method includes the following specific implementation steps.

In step 101, Optical Character Recognition (OCR) is performed on a PDF document in image form to obtain recognized target results and first coordinate information for each target result, where each target result includes: one character or at least two consecutive characters forming a character segment.

In step 102, for each target result, the first coordinate information is converted into corresponding PDF coordinates and used as second coordinate information.

In step 103, a target font library for rewriting is determined based on one or more characters in each target result.

In step 104, the one or more characters from each target result are rewritten into the PDF document based on the second coordinate information and the target font library, to obtain a desired target document.

It can be seen that, using the above solution of the method according to the embodiment, by performing OCR, coordinate conversion, target font library generation, and character rewriting operations, characters in image-form PDF documents can be converted to standard characters in PDF documents. This allows users to conveniently perform various operations on PDF documents, such as copying, pasting, and click-and-drag selection, thereby enhancing the usability of image-form PDF documents and improving the accuracy of operation results.

After performing OCR on the PDF document, recognized target results and first coordinate information for each target result can be obtained. In practical applications, each target result may include only one character, returning at the granularity of each character, or may return in the form of character segments, with a line of content possibly returning several target results. The first coordinate information refers to the coordinates returned by OCR, typically with the upper-left corner of the page as the origin, while PDF documents by default use the lower-left corner of the page as the origin, so coordinate conversion is necessary. Additionally, a PDF document (page) itself may have a rotation angle, such as 0 degrees, 90 degrees, 180 degrees, and 270 degrees, with different rotation angles corresponding to different coordinate conversion methods.

Accordingly, in some embodiments of the present disclosure, for each target result, converting the first coordinate information into corresponding PDF coordinates may include: determining the rotation angle of the PDF document, and for each target result, converting the first coordinate information into the corresponding PDF coordinates according to a coordinate transformation method corresponding to the rotation angle.

Specifically, in some embodiments of the present disclosure, for any target result, converting the first coordinate information into second coordinate information may include:

In response to determining that the rotation angle is 0 degrees, taking an x-axis coordinate from the first coordinate information as an x-axis coordinate in the second coordinate information, and taking a difference between H and a y-axis coordinate from the first coordinate information as a y-axis coordinate in the second coordinate information, where H represents a page height of the PDF document;

In response to determining that the rotation angle is 90 degrees, taking a y-axis coordinate from the first coordinate information as an x-axis coordinate in the second coordinate information, and taking an x-axis coordinate from the first coordinate information as a y-axis coordinate in the second coordinate information;

In response to determining that the rotation angle is 180 degrees, taking the difference between W and an x-axis coordinate from the first coordinate information as an x-axis coordinate in the second coordinate information, and taking a y-axis coordinate from the first coordinate information as a y-axis coordinate in the second coordinate information, where W represents a page width of the PDF document; and

In response to determining that the rotation angle is 270 degrees, taking the difference between H and a y-axis coordinate from the first coordinate information as an x-axis coordinate in the second coordinate information, and taking the difference between W and an x-axis coordinate from the first coordinate information as a y-axis coordinate in the second coordinate information.

For any target result, the first coordinate information typically includes: the coordinate information of the four vertices (upper-left, lower-left, upper-right, and lower-right) of the rectangle containing the target result, with each vertex's coordinate information including an x-axis coordinate and a y-axis coordinate.

Assuming the upper-left vertex coordinate in the first coordinate information of a certain target result is (xocr, yocr), where xocr represents the x-axis coordinate and yocr represents the y-axis coordinate, the page width of the PDF document is W, the page height is H, and the rotation angle is θ (which could be 0 degrees, 90 degrees, 180 degrees, or 270 degrees), then the converted PDF coordinates (xpdf, ypdf) can be calculated as follows:

Rotation angle is 0 degrees (i.e., θ = 0 degrees):

$$xpdf = xocr;$$

$$ypdf = H - yocr;$$

Rotation angle is 90 degrees (i.e., θ = 90 degrees):

$$xpdf = yocr;$$

$$ypdf = xocr;$$

Rotation angle is 180 degrees (i.e., θ = 180 degrees):

$$xpdf = W - xocr;$$

$$ypdf = yocr;$$

Rotation angle is 270 degrees (i.e., θ = 270 degrees):

$$xpdf = H - yocr;$$

$$ypdf = W - xocr.$$

Where xpdf represents the x-axis coordinate in the PDF coordinates, and ypdf represents the y-axis coordinate in the PDF coordinates. It can be seen that when the rotation angle is 90 degrees and 270 degrees, the roles of the page width and height are swapped during the calculation.

Through the above processing, the required coordinate conversion results may be obtained efficiently and accurately, thereby improving the accuracy of subsequent character rewriting.

Additionally, the PDF format specification defines 14 standard fonts, which may be applied in any PDF reader that follows the specification. However, these 14 standard fonts are usually for non-Chinese (i.e., Western) characters, so Chinese fonts need to be defined.

Accordingly, in some embodiments of the present disclosure, the Chinese font corresponding to Chinese characters in each target result may be determined, and the target font library may be determined based on the Chinese font and the Chinese characters in each target result.

Specifically, in some embodiments of the present disclosure, the original font library corresponding to the Chinese font may be obtained, and the original font library may be cropped to obtain the target font library, which is a subset of the original font library and includes glyph codes corresponding to all Chinese characters in the target results.

For example, the Chinese font may be Source Han Sans, and the original font library would be the open-source Source Han Sans font library.

Considering that the original font library is usually large, using the original font library directly would affect the speed of subsequent character rewriting, so a font library cropping operation may be performed to obtain a smaller target font library, thereby improving the speed of subsequent character rewriting and processing efficiency.

In practical applications, a font processing tool (FontTools) may be introduced to achieve font library cropping with the help of FontTools. For example, the following definition may be made: subset_font(input_font_path, output_font_path, unicode_chars), where the input parameter (input_font_path) is the original font library, i.e., the original font file, the output (output_font_path) is the cropped target font library, and the character encoding (unicode_chars) is used to specify which Chinese characters' glyph codes need to be retained in the target font library.

For instance, suppose the original font library includes glyph codes for 20,000 Chinese characters, but the target results only include 500 Chinese characters from these 20,000 characters. In this case, a target font library corresponding to these 500 Chinese characters may be generated, and the corresponding character encoding would be the character encodings of these 500 Chinese characters.

After the aforementioned OCR, coordinate conversion, and font library cropping, the character rewriting operation may be performed. This involves rewriting characters from each target result into the PDF document based on the second coordinate information and the target font library to obtain the desired target document.

For example, an open-source PDF rendering component library (PDFium) may be initialized, and subsequent operations may be completed based on PDFium. This includes opening the PDF document (the image-form PDF document according to the present disclosure), loading each page of the PDF document, and then rewriting characters from each target result into the corresponding page based on the second coordinate information and the target font library, followed by saving the new document, i.e., obtaining the desired target document.

Additionally, in some embodiments of the present disclosure, after rewriting characters from each target result into the corresponding page, the object attributes of the rewritten characters may be set to invisible (FPDF_TEXTRENDERMODE_INVISIBLE).

This way, for users, the PDF document still appears the same as before the processing according to the present disclosure, but users may now perform operations such as copying, pasting, click-and-drag selecting, searching, and retrieving, just like with common PDF documents.

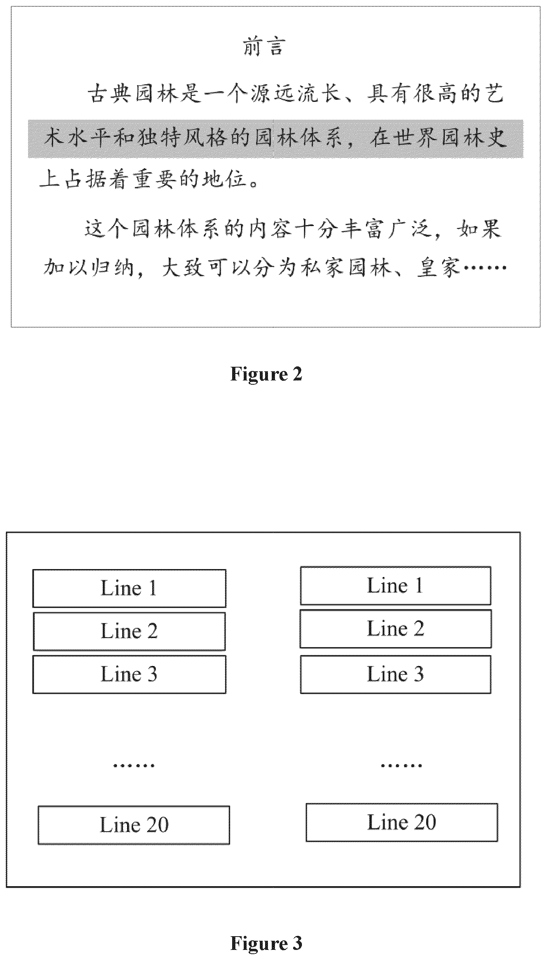

Figure 2 is a schematic diagram of a click-and-drag selection operation on a target document according to the present disclosure. As shown in Figure 2, users may conveniently select by click-and-drag a portion of the content (gray area) in a very flexible and convenient manner.

Furthermore, Figure 3 is a schematic diagram of a page column layout according to the present disclosure. As shown in Figure 3, if the PDF document's page has a column layout (in Figure 3, it is a two-column layout, but it could include more columns in practice), OCR does not return results in the context order of the document. For example, suppose the left column in the two-column layout shown in Figure 3 includes 20 lines, and the right column also includes 20 lines. Theoretically, after returning the target results corresponding to the content of the first line (Line 1) in the left column, the target results corresponding to the content of the second line (Line 2) in the left column should be returned. However, in practice, the target results corresponding to the content of the first line in the right column might be returned instead. Therefore, after obtaining the target results and the first coordinate information for each target result through OCR, data reorganization may be performed.

In some embodiments of the present disclosure, data reorganization refers to performing line grouping on the target results to obtain text lines grouped and performing paragraph grouping on the text lines to obtain text paragraphs grouped.

That is, text lines and text paragraphs may be restructured based on the OCR results, which may facilitate subsequent user operations. For example, when a user performs a click selection operation in the target document, they may directly select a paragraph (text paragraph). Additionally, when the target document has a column layout, if the user performs a click-and-drag selection operation, it may better distinguish between different paragraphs. Furthermore, when the target document is used as a data source for a large model, the restructured text lines and text paragraphs may help the large model better understand the content of the target document, thereby making the generated responses more accurate.

The following describes the specific implementation of line grouping and paragraph grouping.

1) Line Grouping

In some embodiments of the present disclosure, initial lines may be determined based on the first coordinate information of the target results, with each initial line including at least one target result, and each target result belonging to one initial line. For each initial line, characters in the initial line may be grouped based on character spacing of the characters included in the initial line, and text lines may be determined based on the grouping results of the initial lines.

Through this processing, text lines may be obtained and used as the basis for subsequent paragraph grouping to obtain the desired text paragraphs.

In some embodiments of the present disclosure, the method of determining the initial lines may include: based on a return order of the target results during OCR, taking a first returned target result as a result to be processed and performing the following first process: adding the result to be processed to a new initial line; according to the return order from first to last, sequentially selecting, from target results not yet added to any initial line, a target result whose y-axis coordinate meet the following requirement: a difference between the y-axis coordinate and a y-axis coordinate of the result to be processed is less than a first value, and adding the selected target result to the new initial line, where the first value equals to a character height of the result to be processed multiplied by a first coefficient, the first coefficient being greater than 0 and less than 1; taking a first returned target result not yet added to any initial line as the result to be processed and repeating the first process, where the first coordinate information includes x-axis and y-axis coordinates.

For example, suppose there are 50 target results, numbered sequentially as target result 1 to target result 50 according to the return order. First, take target result 1 as the result to be processed and add it to a new initial line, such as initial line 1. Then, target results 2 to 50 are traversed sequentially, and for each target result traversed, determine whether it meets the requirement that the difference between its y-axis coordinate and the y-axis coordinate of the result to be processed is less than a first value. If it does, the target result is added to initial line 1. Suppose after traversing, target results 2 and 4 are added to initial line 1, then initial line 1 includes target results 1, 2, and 4. Next, the first returned target result not yet added to any initial line is taken as the result to be processed, i.e., target result 3 may be taken as the result to be processed and added to a new initial line, such as initial line 2. Then, target results 5 to 50 are traversed sequentially, and subsequent processing may refer to the previous description and will not be repeated here.

Typically, the character height of each character in the same target result is the same. Additionally, the specific value of the first coefficient may be determined according to actual needs, such as 1/5. If the difference between the y-axis coordinate of a target result and the y-axis coordinate of the result to be processed is less than 1/5 of the character height of the pending result, then the target result is determined to meet the requirement.

It should be noted that when determining the difference, the y-axis coordinates of the target result and the result to be processed need to correspond to the same vertex, such as the y-axis coordinate of the lower-left vertex.

In this way, the initial lines are determined based on the first coordinate information of each target result, laying a good foundation for subsequent processing.

Further, for each initial line, characters in the initial line may be grouped based on character spacing of the characters included in the initial line.

In some embodiments of the present disclosure, for any initial line, in response to determining that a character spacing between any two adjacent characters in the initial line is greater than a second value, the two adjacent characters may be taken as delimiter characters, and the first and last characters in the initial line may be taken as delimiter characters. Then, a group may be formed using each two adjacent delimiter characters and the characters between the each two adjacent delimiter characters, where the second value equals to an average character spacing in the initial line multiplied by M, M being a positive integer greater than one.

The two adjacent characters taken as delimiter characters typically refer to characters from two different target results, such as the last character of the previous target result and the first character of the next target result. The specific value of M may be determined according to actual needs, such as 3. That is, if the character spacing between two adjacent characters is greater than three times the average character spacing in the initial line, then these two adjacent characters may be taken as delimiter characters.

Suppose an initial line includes 30 characters, numbered sequentially as character 1 to character 30 from front to back, and suppose characters 1, 10, 11, 16, 17, and 30 are delimiter characters, then the following groups will be obtained: a group formed by characters 1 to 10, a group formed by characters 11 to 16, and a group formed by characters 17 to 30.

Through this processing, logical grouping of each initial line can be achieved, thereby improving the efficiency of subsequent text line generation.

Further, text lines can be determined based on the grouping results of the initial lines.

In some embodiments of the present disclosure, for any initial line, in response to determining that the initial line includes only one grouping result, the grouping result is directly taken as one text line. In response to determining that the initial line includes at least two grouping results, further analysis on the relationship of the at least two grouping results is needed to determine one or more text lines, where each text line includes at least one grouping result, and each grouping result belongs to one text line.

In some embodiments of the present disclosure, for any initial line, the first grouping result in the initial line may be taken as a reserved result. In response to selecting, from grouping results other than the first grouping result, grouping results that belong to different columns on the page, for the selected grouping results, one text line may be formed using grouping results belonging to a same column; in response to determining the existence of other grouping results, which are grouping results other than the reserved result and the selected grouping results, and determining that the other grouping results meet content continuity requirements with the reserved result, one text line may be formed using the reserved result and the other grouping results; in response to determining that no other grouping results exist, one text line may be formed using the reserved result.

When there is a column layout on the page, taking a two-column layout as an example, the y-axis coordinates at the same position in the left and right columns are usually the same or similar. For instance, the y-axis coordinates of the first line in the left column and the first line in the right column are usually the same or similar, and the same applies to other lines. Therefore, the target results corresponding to the content of the first line in the left column and the first line in the right column are likely to be grouped into the same initial line. However, due to the larger character spacing between the two columns, the target results corresponding to the two columns are usually grouped into different grouping results.

Additionally, suppose an initial line includes three grouping results: grouping result 1, grouping result 2, and grouping result 3. The first grouping result is taken as the reserved result and the grouping results that belong to different columns on the page are determined from grouping result 2 and grouping result 3. Assuming the page is a two-column layout and grouping result 3 belongs to the grouping result corresponding to the right column, then grouping result 3 is taken as one text line. Further, it can be determined whether grouping result 1 and grouping result 2 meet content continuity requirements. If they do, one text line is formed using grouping result 1 and grouping result 2. Additionally, suppose both grouping result 2 and grouping result 3 belong to the grouping result corresponding to the right column in a two-column layout, and grouping result 2 and grouping result 3 meet content continuity requirements, then one text line is formed using grouping result 2 and grouping result 3. In this case, grouping result 1 will be taken as one text line. Furthermore, suppose in a three-column layout, grouping result 1, grouping result 2, and grouping result 3 belong to different columns, then grouping result 1, grouping result 2, and grouping result 3 each is taken as one text line.

For any initial line, how to determine the grouping results corresponding to different columns is not limited. For example, considering that the x-axis coordinates of the grouping results in the same column are relatively close and within a certain range, the x-axis coordinates of the grouping results in each initial line can be compared and analyzed to determine the number of columns on the page and the column to which each grouping result belongs.

Additionally, for two grouping results in the same initial line, how to determine whether they meet content continuity requirements is also not limited. For example, whether they meet content continuity requirements may be determined by analyzing the contextual semantics of the two grouping results, or a pre-trained evaluation model may be used to score the content continuity between the two grouping results. If the score is greater than a threshold, it may be considered that they meet content continuity requirements.

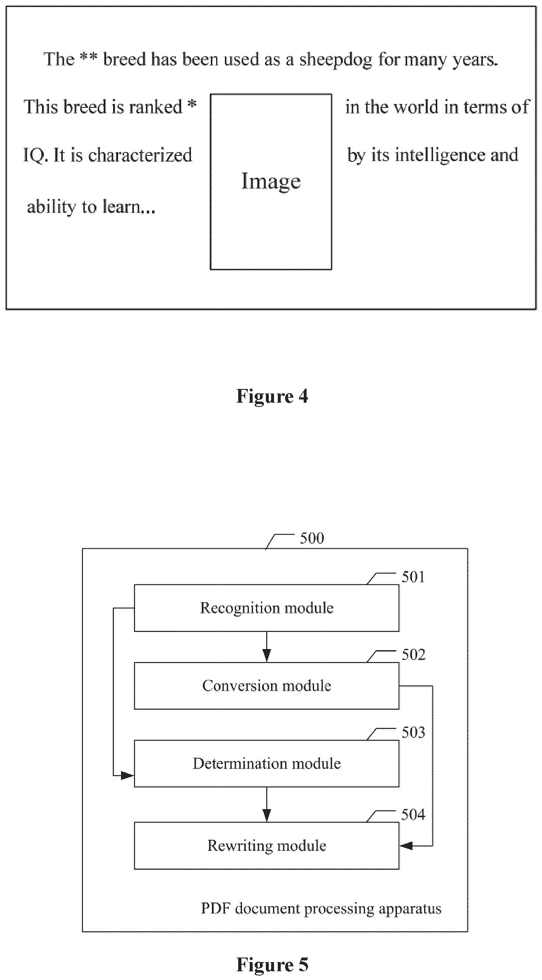

Suppose the grouping result 1 and grouping result 2 meet content continuity requirements, then a text line can be formed using grouping result 1 and grouping result 2. The content of a text line being divided into two or more grouping results is usually due to wrap-around. Figure 4 is a schematic diagram of the wrap-around situation according to the present disclosure. As shown in Figure 4, taking the second line as an example, "this breed is ranked *" and "in the world in terms of" are separated due to wrap-around, but they actually belong to the same line of content. The image shown in Figure 4 may be the image corresponding to "The ** breed".

After the above processing, individual text lines are obtained. Based on these text lines, further paragraph grouping may be performed to obtain the grouped text paragraphs, thereby achieving the final data reorganization purpose.

2) Paragraph Grouping

In some embodiments of the present disclosure, for each column, the following processing may be performed: according to the first coordinate information, the text lines in the column may be sorted in the order from top to bottom, and the text lines may be divided into at least one data block based on the line spacing between the sorted text lines. For each data block, paragraph identification may be performed to obtain identified text paragraphs.

For example, suppose a column includes 30 text lines. After processing in the above manner, one data block may be formed, or multiple data blocks may be formed, with each data block including at least one text line, and each of the 30 text lines belonging to one data block.

It can be seen that in the above processing method, block grouping may be performed based on text lines to obtain data blocks composed of text lines, and then paragraph identification may be performed on the data blocks to obtain the desired text paragraphs, thereby improving processing efficiency and enhancing the accuracy of processing results through multi-step processing.

In some embodiments of the present disclosure, the method of dividing the text lines into at least one data block may include: taking a first text line in the sorted order as a text line to be processed and performing the following second process: in response to determining that at least 3 consecutive text lines starting from the text line to be processed meet the following condition: the line spacing between each two adjacent text lines is the same, forming a data block using the at least 3 consecutive text lines, and taking the first text line after the data block as the text line to be processed, repeating the second process; otherwise, marking the text line to be processed as a reserved text line, and taking the first text line after the reserved text line as the text line to be processed, repeating the second process; further, in response to determining that all text lines have been processed, where each of the text lines being formed as a part of a data block or being marked as a reserved text line, forming a data block using each reserved text line between each two adjacent data blocks.

For example, suppose a column includes 30 text lines, numbered sequentially as text line 1 to text line 30 from top to bottom. First, take text line 1 as the text line to be processed, and suppose that from text line 1 to text line 4, the line spacing between each two adjacent text lines is the same, then these 4 text lines may be used to form a data block. Next, text line 5 may be taken as the text line to be processed, and suppose text line 5 is marked as a reserved text line. Then, text line 6 may be taken as the text line to be processed, and suppose text line 6 is also marked as a reserved text line. Then, text line 7 may be taken as the text line to be processed, and suppose that from text line 7 to text line 14, the line spacing between each two adjacent text lines is the same, then these 8 text lines may be used to form a data block. Further, suppose text line 15 is marked as a reserved text line, and suppose a data block is formed using text line 16 to text line 30. Then a total of 5 data blocks may be obtained, respectively: data block 1 formed by text line 1 to text line 4, data block 2 formed by text line 5 to text line 6, data block 3 formed by text line 7 to text line 14, data block 4 formed by text line 15, and data block 5 formed by text line 16 to text line 30.

For each data block, paragraph identification may be performed to obtain identified text paragraphs. In some embodiments of the present disclosure, for any data block, the first text line in the data block may be taken as a text line to be identified and a paragraph start text line, and the following third process may be performed: performing paragraph end identification on the text line to be identified; in response to determining that the text line to be identified is not a paragraph end text line, taking a next adjacent text line as the text line to be identified and repeating the third process; in response to determining that the text line to be identified is a paragraph end text line, forming a text paragraph using the text lines from the paragraph start text line to the paragraph end text line, and taking a next adjacent text line as the text line to be identified and the paragraph start text line, repeating the third process.

For example, suppose a data block includes 15 text lines, numbered sequentially as text line 1 to text line 15. First, text line 1 may be taken as the paragraph start text line. Suppose text line 1 is also identified as the paragraph end text line, then a text paragraph may be formed using text line 1. Next, suppose text line 7 is identified as the paragraph end text line, then a text paragraph may be formed using text line 2 to text line 7. Further, suppose text line 15 is identified as the paragraph end text line, then a text paragraph may be formed using text line 8 to text line 15.

Through the above processing, each data block may be divided into one or more text paragraphs, thereby completing the data reorganization process. This allows better support for user operations on the target document and enables large models to better understand the content of the target document.

In some embodiments of the present disclosure, the method of performing paragraph end identification on the text line to be identified may include one or any combination of the following: 1) In response to determining that a distance between a last character of the text line to be identified and the right margin of the page is greater than a first threshold, determining the text line to be identified as the paragraph end text line; 2) In response to determining that the last character of the text line to be identified is a predetermined terminator, determining the text line to be identified as the paragraph end text line; and 3) Performing paragraph start identification on the next adjacent text line to the text line to be identified, and in response to determining that the next adjacent text line is identified as a paragraph start text line, determining the text line to be identified as the paragraph end text line.

In practical applications, the text line to be identified can be finally determined as the paragraph end text line when any one of the above methods 1), 2), and 3) identifies the text line to be identified as the paragraph end text line, or when any two of the methods identify the text line to be identified as the paragraph end text line, or when all three methods identify the text line to be identified as the paragraph end text line, which is very flexible and convenient.

Among them, method 1) uses a positional judgment method. Compared to non-paragraph end text lines, the distance between the last character of a paragraph end text line and the right margin of the page is usually larger. Therefore, by reasonably setting the value of the first threshold and comparing the distance with the first threshold, it can be determined whether the text line to be identified is a paragraph end text line.

Method 2) uses a punctuation judgment method. If the last character of the text line to be identified is determined to be a terminator, such as a period, question mark, exclamation mark, etc., then the text line to be identified can be determined as the paragraph end text line.

Method 3) uses a contextual judgment method. If the next adjacent text line to the text line to be identified is determined to be a paragraph start text line, then the text line to be identified can be determined as the paragraph end text line.

Preferably, two or all of the above three methods may be combined to finally determine whether the text line to be identified is a paragraph end text line, to improve the accuracy of the processing results.

In some embodiments of the present disclosure, the method of performing paragraph start identification on any text line may include one or any combination of the following: 1) In response to determining that the text line exhibits first-line indentation, determining the text line as the paragraph start text line; 2) In response to determining that the difference in character height between the text line and the previous adjacent text line is greater than a second threshold, determining the text line as the paragraph start text line; 3) In response to determining that the difference between the first line spacing and the second line spacing is greater than a third threshold, determining the text line as the paragraph start text line, where the first line spacing is the line spacing between the text line and the previous adjacent text line, and the second line spacing is the line spacing between the text line and the next adjacent text line.

In practical applications, for any text line, it may be finally determined as the paragraph start text line when any one of the above methods 1), 2), and 3) identifies the text line as the paragraph start text line, or when any two of the methods identify the text line as the paragraph start text line, or when all three methods identify the text line as the paragraph start text line, which is very flexible and convenient.

Among them, method 1) uses a first-line indentation judgment method. If it is determined that, compared to other text lines, the text line exhibits a significant first-line indentation, then the text line can be determined as the paragraph start text line.

Method 2) uses a character height judgment method. Generally, the character heights in each text line within the same paragraph are the same or have very small differences. Therefore, if it is determined that the difference in character height between the text line and the previous adjacent text line is greater than a second threshold, the text line can be determined as the paragraph start text line. The specific value of the second threshold can be determined according to actual needs.

Method 3) uses a line spacing judgment method. Generally, the line spacing between each text line within the same paragraph is the same or has very small differences. Therefore, if it is determined that the difference between the first line spacing (between the text line and the previous adjacent text line) and the second line spacing (between the text line and the next adjacent text line) is greater than a third threshold, the text line can be determined as the paragraph start text line. The specific value of the third threshold may be determined according to actual needs.

Preferably, two or all of the above three methods may be combined to finally determine whether the text line is a paragraph start text line, to improve the accuracy of the processing results.

It should be noted that for the method embodiments described above, for simplicity of description, they are expressed as a series of action combinations. However, those skilled in the art should understand that the present disclosure is not limited by the described action sequences, as certain steps may be performed in other orders or simultaneously according to the present disclosure. Secondly, those skilled in the art should also understand that the embodiments described in the specification are preferred embodiments, and the actions and modules involved are not necessarily required by the present disclosure.

The above is an introduction to the method embodiments. The following describes the apparatus embodiments to further illustrate the present disclosure.

Figure 5 is a schematic diagram of a composition structure of a PDF document processing apparatus according to a first embodiment 500 of the present disclosure. As shown in Figure 5, the apparatus includes: a recognition module 501, a conversion module 502, a determination module 503, and a rewriting module 504.

The recognition module 501 is configured to perform OCR on a PDF document in image form to obtain recognized target results and first coordinate information for each target result, where each target result includes: one character or at least two consecutive characters forming a character segment.

The conversion module 502 is configured to, for each target result, convert the first coordinate information into corresponding PDF coordinates and use the PDF coordinates as second coordinate information.

The determination module 503 is configured to determine a target font library for rewriting based on one or more characters in each target result.

The rewriting module 504 is configured to rewrite the one or more characters from each target result into the PDF document based on the second coordinate information and the target font library, to obtain a desired target document.

Using the above apparatus embodiment, through OCR, coordinate conversion, target font library generation, and character rewriting operations, characters in image-form PDF documents can be converted to standard characters in PDF documents. This allows users to conveniently perform various operations on PDF documents, such as copying, pasting, and selecting, thereby enhancing the usability of image-form PDF documents and improving the accuracy of operation results.

After the recognition module 501 performs OCR on the image-form PDF document to obtain recognized target results and first coordinate information for each target result, the conversion module 502 may convert the first coordinate information into corresponding PDF coordinates for each target result and use the PDF coordinates as second coordinate information.

In some embodiments of the present disclosure, the method of the conversion module 502 converting the first coordinate information into corresponding PDF coordinates for each target result may include: determining a rotation angle of the PDF document, and for each target result, converting the first coordinate information into the corresponding PDF coordinates according to a coordinate transformation method corresponding to the rotation angle.

Specifically, in some embodiments of the present disclosure, the method of the conversion module 502 converting the first coordinate information into second coordinate information for any target result may include: in response to determining that the rotation angle is 0 degrees, taking an x-axis coordinate from the first coordinate information as an x-axis coordinate in the second coordinate information, and taking a difference between H and a y-axis coordinate from the first coordinate information as a y-axis coordinate in the second coordinate information, where H represents a page height of the PDF document; in response to determining that the rotation angle is 90 degrees, taking a y-axis coordinate from the first coordinate information as an x-axis coordinate in the second coordinate information, and taking an x-axis coordinate from the first coordinate information as a y-axis coordinate in the second coordinate information; in response to determining that the rotation angle is 180 degrees, taking the difference between W and an x-axis coordinate from the first coordinate information as an x-axis coordinate in the second coordinate information, and taking a y-axis coordinate from the first coordinate information as a y-axis coordinate in the second coordinate information, where W represents the page width of the PDF document; and in response to determining that the rotation angle is 270 degrees, taking the difference between H and a y-axis coordinate from the first coordinate information as an x-axis coordinate in the second coordinate information, and taking the difference between W and an x-axis coordinate from the first coordinate information as a y-axis coordinate in the second coordinate information.

Additionally, the determination module 503 may determine a target font library for rewriting based on characters in each target result. In some embodiments of the present disclosure, the determination module 503 may determine a Chinese font corresponding to one or more Chinese characters in each target result and determine the target font library based on the Chinese font and the Chinese characters in each target result.

Specifically, in some embodiments of the present disclosure, the determination module 503 may obtain the original font library corresponding to the Chinese font and crop the original font library to obtain the target font library, which is a subset of the original font library and includes glyph codes corresponding to all Chinese characters in the target results.

Further, the rewriting module 504 may rewrite characters from each target result into the PDF document based on the second coordinate information and the target font library, to obtain a desired target document.

In some embodiments of the present disclosure, after rewriting the one or more characters from each target result into the corresponding page, the rewriting module 504 can also set the object attributes of the rewritten characters to invisible.

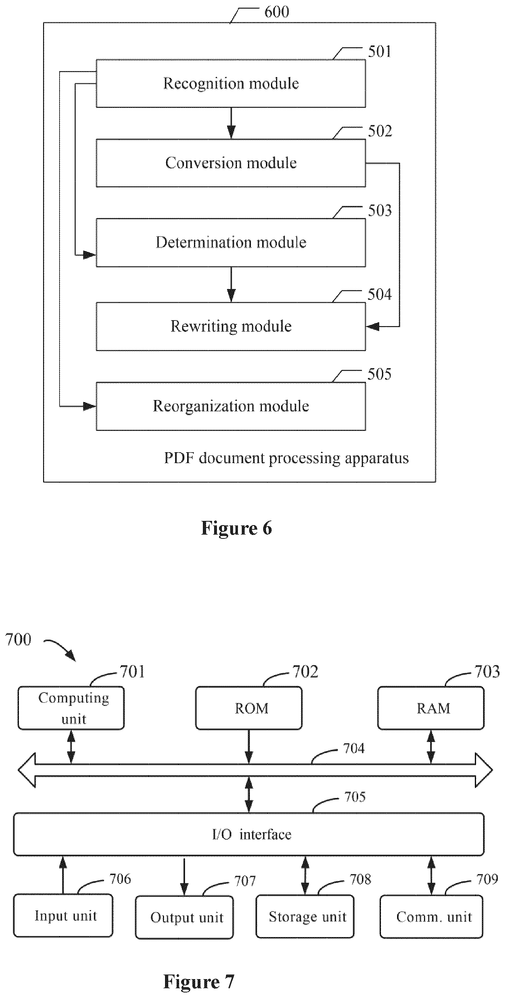

Figure 6 is a schematic diagram of a composition structure of a PDF document processing apparatus according to a second embodiment 600 of the present disclosure. As shown in Figure 6, the apparatus includes: a recognition module 501, a conversion module 502, a determination module 503, a rewriting module 504, and a reorganization module 505.

Among them, the recognition module 501, conversion module 502, determination module 503, and rewriting module 504 are the same as in the embodiment shown in Figure 5 and will not be repeated here.

The reorganization module 505 is configured to, after obtaining the recognized target results, perform line grouping on the target results to obtain text lines and perform paragraph grouping on the text lines to obtain text paragraphs.

In some embodiments of the present disclosure, the reorganization module 505 may determine initial lines based on the first coordinate information of the target results, each initial line including at least one target result, each target result belonging to one initial line; for each initial line, group characters in the initial line based on character spacing of the characters included in the initial line, and determine text lines based on the grouping results of the initial lines.

In some embodiments of the present disclosure, the method of the reorganization module 505 determining the initial lines may include: based on the return order of the target results during OCR, taking the first returned target result as a result to be processed and performing the following first process: adding the result to be processed to a new initial line; according to the return order from first to last, sequentially selecting, from target results not yet added to any initial line, a target result whose y-axis coordinates meet the following requirement: a difference between the y-axis coordinates of the target result and a y-axis coordinate of the result to be processed is less than a first value, and adding the selected target results to the new initial line, where the first value equals to a character height of the result to be processed multiplied by a first coefficient, the first coefficient being greater than 0 and less than 1; taking a first returned target result not yet added to any initial line as the result to be processed and repeating the first process, where the first coordinate information includes x-axis and y-axis coordinates.

Further, the reorganization module 505 may, for each initial line, group characters in the initial line based on character spacing of the characters included in the initial line. In some embodiments of the present disclosure, the reorganization module 505, for any initial line, in response to determining that character spacing between any two adjacent characters in the initial line is greater than a second value based on the first coordinate information, may take the two adjacent characters as delimiter characters, and may take the first and last characters in the initial line as delimiter characters. Then, a group may be formed using each two adjacent delimiter characters and the characters between the each two adjacent delimiter characters, where the second value equals to average character spacing in the initial line multiplied by M, M being a positive integer greater than one.

The reorganization module 505 may also determine text lines based on the grouping results of the initial lines. In some embodiments of the present disclosure, the reorganization module 505, for any initial line, in response to determining that the initial line includes only one grouping result, may take the grouping result as one text line. In response to determining that the initial line includes at least two grouping results, the reorganization module 505 may analyze a relationship between the at least two grouping results to determine at least one text line, each text line including at least one grouping result, each grouping result belonging to one text line.

In some embodiments of the present disclosure, the reorganization module 505, for any initial line, may take the first grouping result in the initial line as a reserved result. In response to selecting, from grouping results other than the first grouping result, grouping results that belong to different columns on the page, for the selected grouping results, the reorganization module 505 may form one text line using grouping results belonging to a same column. In response to determining the existence of other grouping results, which are grouping results other than the reserved result and the selected grouping results, and determining that the other grouping results meet content continuity requirements with the reserved result, the reorganization module 505 may form one text line using the reserved result and the other grouping results. In response to determining that no other grouping results exist, the reorganization module 505 may form a text line using the reserved result.

In some embodiments of the present disclosure, the reorganization module 505 may also perform the following process for each column: according to the first coordinate information, sort the text lines in the column from top to bottom, divide the sorted text lines into at least one data block based on the line spacing between the text lines, and for each data block, perform paragraph identification to obtain identified text paragraphs.

In some embodiments of the present disclosure, the method of the reorganization module 505 dividing the text lines into at least one data block may include: taking the first text line in the sorted order as a text line to be processed and performing the following second process: in response to determining that at least 3 consecutive text lines starting from the text line to be processed meet the following condition: the line spacing between each two adjacent text lines is the same, forming a data block using the at least 3 consecutive text lines, and taking the first text line after the data block as the text line to be processed, repeating the second process; otherwise, marking the text line to be processed as a reserved text line, and taking the first text line after the reserved text line as the text line to be processed, repeating the second process; further, in response to determining that all text lines have been processed, where each of the text lines being formed as a part of a data block or being marked as a reserved text line, forming a data block using each reserved text line between each two adjacent data blocks.

For each data block, the reorganization module 505 may also perform paragraph identification to obtain identified text paragraphs. In some embodiments of the present disclosure, the reorganization module 505, for any data block, may take a first text line in the data block as a text line to be identified and a paragraph start text line, and perform the following third process: performing paragraph end identification on the text line to be identified; in response to determining that the text line to be identified is not a paragraph end text line, taking the next adjacent text line as the text line to be identified and repeating the third process; in response to determining that the text line to be identified is a paragraph end text line, forming a text paragraph using the text lines from the paragraph start text line to the paragraph end text line, and taking a next adjacent text line as the text line to be identified and the paragraph start text line, repeating the third process.

In some embodiments of the present disclosure, the reorganization module 505 performs paragraph end identification on the text line to be identified by one or any combination of the following: in response to determining that a distance between the last character of the text line to be identified and the right margin of the page is greater than a first threshold, determining the text line to be identified as the paragraph end text line; in response to determining that the last character of the text line to be identified is a predetermined terminator, determining the text line to be identified as the paragraph end text line; performing paragraph start identification on the next adjacent text line to the text line to be identified, and in response to determining that the next adjacent text line is identified as a paragraph start text line, determining the text line to be identified as the paragraph end text line.

Additionally, in some embodiments of the present disclosure, the reorganization module 505 performs paragraph start identification on any text line by one or any combination of the following: in response to determining that the text line exhibits first-line indentation, determining the text line as the paragraph start text line; in response to determining that the difference in character height between the text line and the previous adjacent text line is greater than a second threshold, determining the text line as the paragraph start text line; in response to determining that the difference between the first line spacing and the second line spacing is greater than a third threshold, determining the text line as the paragraph start text line, where the first line spacing is the line spacing between the text line and the previous adjacent text line, and the second line spacing is the line spacing between the text line and the next adjacent text line.

The specific workflow of the apparatus embodiments shown in Figures 5 and 6 may refer to the relevant descriptions in the aforementioned method embodiments and will not be repeated here.

The present disclosure may be applied in the field of artificial intelligence, particularly in the field of natural language processing and computer vision. Artificial intelligence is the study of making computers simulate certain thought processes and intelligent behaviors (such as learning, reasoning, thinking, planning, etc.). It involves both hardware and software technologies. Artificial intelligence hardware technologies generally include sensors, dedicated AI chips, cloud computing, distributed storage, big data processing, etc. Artificial intelligence software technologies mainly include computer vision technology, speech recognition technology, natural language processing technology, machine learning/deep learning, big data processing technology, knowledge graph technology, and other major directions.

Furthermore, the PDF documents and other elements in the embodiments of the present disclosure are not specific to any particular user and do not reflect personal information of any specific user. The technical solutions of the present disclosure comply with relevant laws and regulations regarding the collection, storage, use, processing, transmission, provision, and disclosure of user personal information, and do not violate public order and good customs.

According to the embodiments of the present disclosure, the present disclosure also provides an electronic device, a readable storage medium, and a computer program product.

Figure 7 shows a schematic block diagram of the electronic device 700 that may be used to implement the embodiments of the present disclosure. The electronic device is intended to represent various forms of digital computers, such as laptops, desktop computers, workstations, servers, blade servers, mainframes, and other suitable computers. The electronic device may also represent various forms of mobile devices, such as personal digital assistants, cellular phones, smartphones, wearable devices, and other similar computing devices. The components shown in this article, their connections and relationships, and their functions are merely examples and are not intended to limit the implementation of the present disclosure as described and/or claimed in this article.

As shown in Figure 7, the device 700 includes a computing unit 701, which may perform various appropriate actions and processes according to a computer program stored in a read-only memory (ROM) 702 or a computer program loaded from a storage unit 708 into a random access memory (RAM) 703. Various programs and data required for the operation of the device 700 may also be stored in the RAM 703. The computing unit 701, ROM 702, and RAM 703 are connected to each other via a bus 704. An input/output (I/O) interface 705 is also connected to the bus 704.

Multiple components of the device 700 are connected to the I/O interface 705, including: an input unit 706, such as a keyboard, mouse, etc.; an output unit 707, such as various types of displays, speakers, etc.; a storage unit 708, such as disks, optical disks, etc.; and a communication unit 709, such as a network card, modem, wireless communication transceiver, etc. The communication unit 709 allows the device 700 to exchange information/data with other devices over computer networks such as the Internet and/or various telecommunications networks.

The computing unit 701 may be various general-purpose and/or special-purpose processing components with processing and computing capabilities. Some examples of the computing unit 701 include but are not limited to central processing units (CPUs), graphics processing units (GPUs), various dedicated artificial intelligence (AI) computing chips, various computing units running machine learning model algorithms, digital signal processors (DSPs), and any suitable processors, controllers, microcontrollers, etc. The computing unit 701 executes the various methods and processes described above, such as the methods of the present disclosure. For example, in some embodiments, the methods of the present disclosure may be implemented as computer software programs tangibly contained in machine-readable media, such as the storage unit 708. In some embodiments, portions or all of the computer program may be loaded and/or installed onto the device 700 via the ROM 702 and/or the communication unit 709. When the computer program is loaded into the RAM 703 and executed by the computing unit 701, one or more steps of the methods of the present disclosure may be executed. Alternatively, in other embodiments, the computing unit 701 may be configured to execute the methods of the present disclosure by other any suitable means, such as firmware.

Various embodiments of the systems and technologies described herein may be implemented in digital electronic circuitry, integrated circuits, field-programmable gate arrays (FPGAs), application-specific integrated circuits (ASICs), application-specific standard products (ASSPs), system-on-a-chip systems (SOCs), complex programmable logic devices (CPLDs), computer hardware, firmware, software, and/or combinations thereof.

These various embodiments may include: implementation in one or more computer programs, which may be executed and/or interpreted on a programmable system including at least one programmable processor, which may be a special-purpose or general-purpose programmable processor, receiving data and instructions from a storage system, at least one input device, and at least one output device, and transmitting data and instructions to the storage system, the at least one input device, and the at least one output device.

Program code for implementing the methods of the present disclosure may be written in any combination of one or more programming languages. This program code may be provided to a processor or controller of a general-purpose computer, special-purpose computer, or other programmable data processing apparatus, so that the program code, when executed by the processor or controller, causes the functions/operations specified in the flowcharts and/or block diagrams to be implemented. The program code may be entirely executed on the machine, partially executed on the machine, as a standalone software package partially executed on the machine and partially executed on a remote machine, or entirely executed on a remote machine or server.

In the context of the present disclosure, machine-readable media may be tangible media that may contain or store programs for use by or in connection with an instruction execution system, apparatus, or device. Machine-readable media may be machine-readable signal media or machine-readable storage media. Machine-readable media may include, but are not limited to, electronic, magnetic, optical, electromagnetic, infrared, or semiconductor systems, apparatus, or devices, or any suitable combination of the foregoing. More specific examples of machine-readable storage media would include an electrical connection based on one or more wires, a portable computer disk, a hard disk, random access memory (RAM), read-only memory (ROM), erasable programmable read-only memory (EPROM or flash memory), optical fiber, a portable compact disc read-only memory (CD-ROM), an optical storage device, a magnetic storage device, or any suitable combination of the foregoing.

To provide interaction with a user, the systems and technologies described herein may be implemented on a computer having: a display device for displaying information to the user (e.g., a CRT (cathode ray tube) or LCD (liquid crystal display) monitor); and a keyboard and a pointing device (e.g., a mouse or a trackball) by which the user may provide input to the computer. Other types of devices may also be used to provide interaction with a user; for example, feedback provided to the user may be any form of sensory feedback (e.g., visual feedback, auditory feedback, or tactile feedback); and input from the user may be received in any form, including acoustic, speech, or tactile input.

The systems and technologies described herein may be implemented in a computing system that includes backend components (e.g., as a data server), or a computing system that includes middleware components (e.g., an application server), or a computing system that includes frontend components (e.g., a user computer with a graphical user interface or a web browser through which a user may interact with the embodiments of the systems and technologies described herein), or any combination of such backend, middleware, or frontend components. The components of the system may be interconnected by any form or medium of digital data communication (e.g., a communication network). Examples of communication networks include local area networks (LANs), wide area networks (WANs), and the Internet.

A computer system may include clients and servers. Clients and servers are generally remote from each other and typically interact through a communication network. The relationship of client and server arises by virtue of computer programs running on the respective computers and having a client-server relationship to each other. The server may be a cloud server, a server of a distributed system, or a server that incorporates blockchain technology.

It should be understood that various forms of processes shown above may be used, with steps reordered, added, or removed. For example, the steps described in the present disclosure may be executed in parallel, sequentially, or in different orders, as long as the desired results of the technical solutions of the present disclosure are achieved. This is not limited herein.

The above specific embodiments do not constitute a limitation on the scope of protection of the present disclosure. Those skilled in the art should understand that various modifications, combinations, subcombinations, and substitutions may be made based on design requirements and other factors. Any modifications, equivalent substitutions, and improvements made within the spirit and principle of the present disclosure should be included within the scope of protection of the present disclosure.

**Claims**

1. A Portable Document Format (PDF) document processing method, **characterized by** comprising:

   performing (101) Optical Character Recognition (OCR) on a PDF document in image form to obtain recognized target results and first coordinate information for each target result, wherein each target result comprises: one character or at least two consecutive characters forming a character segment;
   for each target result, converting (102) the first coordinate information into corresponding PDF coordinates and using the PDF coordinates as second coordinate information;

   determining (103) a target font library for rewriting based on one or more characters in each target result; and
   rewriting (104) the one or more characters from each target result into the PDF document based on the second coordinate information and the target font library, to obtain a desired target document.

2. The method of claim 1, wherein converting (102) the first coordinate information into corresponding PDF coordinates for each target result comprises:

   determining a rotation angle of the PDF document;
   for each target result, converting the first coordinate information into the corresponding PDF coordinates according to a coordinate transformation method corresponding to the rotation angle.

3. The method of claim 2, wherein converting the first coordinate information into the corresponding PDF coordinates according to the coordinate transformation method corresponding to the rotation angle comprises:

   in response to determining that the rotation angle is 0 degrees, taking an x-axis coordinate from the first coordinate information as an x-axis coordinate in the second coordinate information, and taking a difference between H and a y-axis coordinate from the first coordinate information as a y-axis coordinate in the second coordinate information, where H represents a page height of the PDF document;
   in response to determining that the rotation angle is 90 degrees, taking a y-axis coordinate from the first coordinate information as an x-axis coordinate in the second coordinate information, and taking an x-axis coordinate from the first coordinate information as a y-axis coordinate in the second coordinate information;
   in response to determining that the rotation angle is 180 degrees, taking the difference between W and an x-axis coordinate from the first coordinate information as an x-axis coordinate in the second coordinate information, and taking a y-axis coordinate from the first coordinate information as a y-axis coordinate in the second coordinate information, where W represents a page width of the PDF document; and
   in response to determining that the rotation angle is 270 degrees, taking the difference between H and a y-axis coordinate from the first coordinate information as an x-axis coordinate in the second coordinate information, and taking the difference between W and an x-axis coordinate from the first coordinate information as a y-axis coordinate in the second coordinate information.

4. The method of any one of claims 1 to 3, wherein determining (103) the target font library for rewriting based on the one or more characters in each target result comprises:

   determining a Chinese font corresponding to one or more Chinese characters in each target result;
   determining the target font library based on the Chinese font and the Chinese characters in each target result.

5. The method of claim 4, wherein determining the target font library based on the Chinese font and the Chinese characters in each target result comprises:

   obtaining an original font library corresponding to the Chinese font;
   cropping the original font library to obtain the target font library, wherein the target font library is a subset of the original font library and includes glyph codes corresponding to all Chinese characters in the target results.

6. The method of any one of claims 1 to 5, further comprising:
   after rewriting the one or more characters from each target result into the PDF document, setting object attributes of the rewritten characters to invisible.

7. The method of any one of claims 1 to 6, further comprising:
   after obtaining recognized target results and the first coordinate information for each target result, performing line grouping on the target results to obtain text lines grouped, and performing paragraph grouping on the text lines to obtain text paragraphs grouped.

8. The method of claim 7, wherein performing line grouping on the target results to obtain text lines grouped comprises:

   determining initial lines based on the first coordinate information of the target results, each initial line comprising at least one target result, each target result belonging to one initial line;
   for each initial line, grouping characters in the initial line based on character spacing of the characters included in the initial line; and
   determining text lines based on the grouping results of the initial lines.

9. The method of claim 8, wherein determining the initial lines based on the first coordinate information of the target results comprises:
   based on a return order of target results during OCR, taking a first returned target result as a result to be processed and performing the following first process: adding the result to be processed to a new initial line; according to the return order from first to last, sequentially selecting, from target results not yet added to any initial line, a target result whose y-axis coordinate meet the following requirement: a difference between the y-axis coordinate of the target result and a y-axis coordinate of the result to be processed is less than a first value, and adding the selected target result to the new initial line, where the first value equals to a character height of the result to be processed multiplied by a first coefficient, the first coefficient being greater than 0 and less than 1; taking a first returned target result not yet added to any initial line as the result to be processed and repeating the first process, wherein the first coordinate information includes x-axis and y-axis coordinates.

10. The method of claim 8 or 9, wherein for each initial line, grouping characters in the initial line based on character spacing of the characters included in the initial line comprises:
    for any initial line, in response to determining that a character spacing between any two adjacent characters in the initial line is greater than a second value, taking the two adjacent characters as delimiter characters, and taking the first and last characters in the initial line as the delimiter characters, forming a group using each two adjacent delimiter characters and the characters between the each two adjacent delimiter characters, where the second value equals to an average character spacing in the initial line multiplied by M, M being a positive integer greater than one.

11. The method of claim 8 or 9 or 10, wherein determining text lines based on the grouping results of the initial lines comprises:

    for any initial line, in response to determining that the initial line includes only one grouping result, taking the grouping result as one text line; in response to determining that the initial line includes at least two grouping results, analyzing a relationship between the at least two grouping results to determine at least one text line, each text line comprising at least one grouping result, each grouping result belonging to one text line.

12. The method of claim 11, wherein analyzing the relationship between the at least two grouping results to determine at least one text line comprises:

taking a first grouping result in the initial line as a reserved result;

in response to selecting, from grouping results other than the first grouping result, grouping results that belong to different columns on the page, for the selected grouping results, forming one text line using grouping results belonging to a same column;

in response to determining the existence of other grouping results, which are grouping results other than the reserved result and the selected grouping results, and determining that the other grouping results meet content continuity requirements with the reserved result, forming one text line using the reserved result and the other grouping results; in response to determining that no other grouping results exist, forming one text line using the reserved result.

13. The method of claim 12, wherein performing paragraph grouping on the text lines to obtain text paragraphs comprises:

for each column, performing the following process: sorting the text lines in the column from top to bottom based on the first coordinate information; dividing the sorted text lines into at least one data block based on line spacing between the text lines; for each data block, performing paragraph identification to obtain identified text paragraphs.

14. The method of claim 13, wherein dividing the sorted text lines into at least one data block comprises:

taking the first text line in the sorted order as a text line to be processed and performing the following second process: in response to determining that at least 3 consecutive text lines starting from the text line to be processed meet the following condition: the line spacing between each two adjacent text lines is the same, forming a data block using the at least 3 consecutive text lines, and taking the first text line after the data block as the text line to be processed, repeating the second process; otherwise, marking the text line to be processed as a reserved text line, and taking the first text line after the reserved text line as the text line to be processed, repeating the second process;

in response to determining that all text lines have been processed where each of the text lines being formed as a part of a data block or being marked as a reserved text line, forming a data block using each reserved text line between each two adjacent data blocks.

15. The method of claim 13 or 14, wherein performing paragraph identification for each data block to obtain identified text paragraphs comprises:

taking a first text line in the data block as a text line to be identified and a paragraph start text line, and performing the following third process: performing paragraph end identification on the text line to be identified; in response to determining that the text line to be identified is not a paragraph end text line, taking a next adjacent text line as the text line to be identified and repeating the third process; in response to determining that the text line to be identified is a paragraph end text line, forming a text paragraph using the text lines from the paragraph start text line to the paragraph end text line, and taking a next adjacent text line as the text line to be identified and the paragraph start text line, repeating the third process.

16. The method of claim 15, wherein performing paragraph end identification on the text line to be identified comprises one or any combination of the following:

in response to determining that a distance between a last character of the text line to be identified and the right margin of the page is greater than a first threshold, determining the text line to be identified as the paragraph end text line;

in response to determining that the last character of the text line to be identified is a predetermined terminator, determining the text line to be identified as the paragraph end text line; and

performing paragraph start identification on the next adjacent text line to the text line to be identified, and in response to determining that the next adjacent text line is identified as a paragraph start text line, determining the text line to be identified as the paragraph end text line.

17. The method of claim 16, wherein performing paragraph start identification on any text line comprises one or any combination of the following:

in response to determining that the text line exhibits first-line indentation, determining the text line as the paragraph start text line;

in response to determining that a difference in character height between the text line and a previous adjacent text line is greater than a second threshold, determining the text line as the paragraph start text line;

in response to determining that the difference between the first line spacing and the second line spacing is greater than a third threshold, determining the text line as the paragraph start text line, where the first line spacing is the line spacing between the text line and the previous adjacent text line, and the second line spacing is the line spacing between the text line and the next adjacent text line.

18. An electronic device, comprising:

   at least one processor; and
   a memory communicatively connected to the at least one processor; wherein
   the memory stores instructions executable by the at least one processor, the instructions, when executed by the at least one processor, enabling the at least one processor to perform the method of any one of claims 1 to 17.

19. A non-transitory computer-readable storage medium storing computer instructions, wherein the computer instructions, when executed by a computer, cause the computer to perform the method of any one of claims 1 to 17.

20. A computer program product, comprising computer program/instructions, wherein the computer program/instructions, when executed by a processor, implement the method of any one of claims 1 to 17.

Performing OCR on a PDF document in image form to obtain recognized target results and first coordinate information for each target result including one character or at least two consecutive characters forming a character segment — 101

For each target result, converting the first coordinate information into corresponding PDF coordinates and using the PDF coordinates as second coordinate information — 102

Determining a target font library for rewriting based on one or more characters in each target result — 103

Rewriting the one or more characters from each target result into the PDF document based on the second coordinate information and the target font library, to obtain a desired target document — 104

**Figure 1**

前言

　古典园林是一个源远流长、具有很高的艺术水平和独特风格的园林体系，在世界园林史上占据着重要的地位。

　这个园林体系的内容十分丰富广泛，如果加以归纳，大致可以分为私家园林、皇家……

**Figure 2**

| Line 1 | Line 1 |
|---|---|
| Line 2 | Line 2 |
| Line 3 | Line 3 |
| …… | …… |
| Line 20 | Line 20 |

**Figure 3**

The ** breed has been used as a sheepdog for many years.

This breed is ranked *                    in the world in terms of

IQ. It is characterized                    by its intelligence and

ability to learn...              Image

**Figure 4**

500

501
Recognition module

502
Conversion module

503
Determination module

504
Rewriting module

PDF document processing apparatus

**Figure 5**

600

```
┌─────────────────────────────────────────────────┐
│                                           501    │
│      ┌─────────────────────────────┐             │
│      │     Recognition module      │             │
│      └─────────────────────────────┘             │
│                     │                     502    │
│                     ▼                            │
│      ┌─────────────────────────────┐             │
│      │     Conversion module       │             │
│      └─────────────────────────────┘             │
│                     │                     503    │
│                     ▼                            │
│      ┌─────────────────────────────┐             │
│      │    Determination module     │             │
│      └─────────────────────────────┘             │
│                     │                     504    │
│                     ▼                            │
│      ┌─────────────────────────────┐             │
│      │      Rewriting module       │             │
│      └─────────────────────────────┘             │
│                                           505    │
│      ┌─────────────────────────────┐             │
│      │    Reorganization module    │             │
│      └─────────────────────────────┘             │
│                                                  │
│        PDF document processing apparatus         │
└─────────────────────────────────────────────────┘
```

**Figure 6**

700

**Figure 7**

Europäisches
Patentamt

European
Patent Office

Office européen
des brevets

# EUROPEAN SEARCH REPORT

**Application Number**

EP 24 22 0543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 102 968 407 A (HANVON CORP) 13 March 2013 (2013-03-13) * abstract * * translated paragraphs 2,4,5,7-14, 19; paragraphs [0001], [0002], [0003], [0004], [0006] - [0008], [0016] * * translated paragraphs 31-35; paragraphs [0026] - [0030]; figure 1 * * translated paragraphs 40-50; paragraphs [0035] - [0045]; figure 2 * * translated paragraphs 51-58; paragraphs [0046] - [0053]; figure 3 * * translated paragraphs 60, 71, 72; paragraphs [0055], [0066], [0067]; figures 4,5 * * Translated paragraphs 80; paragraph [0075] * ----- | 1-20 | INV. G06F40/109 G06V30/10 G06V30/148 G06V30/244 G06V30/414 G06V30/416 G06V30/19 G06V30/146 |
| A | Anonymous: "Should you subset or embed?", , 29 September 2023 (2023-09-29), XP093281021, Retrieved from the Internet: URL:https://web.archive.org/web/2023092920 1919/https://westpress.com/should-you-subs et-or-embed/ * page 1 - page 1 * ----- | 5 | **TECHNICAL FIELDS SEARCHED (IPC)** G06V G06F |
| | -/-- | | |

The present search report has been drawn up for all claims

| Place of search | Date of completion of the search | Examiner |
|---|---|---|
| Berlin | 26 May 2025 | Chéron, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 22 0543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous: "ocr - Is it possible to access the text overlay from a searchable PDF? - Stack Overflow", Stackoverflow, 2 May 2016 (2016-05-02), XP093281064, Retrieved from the Internet: URL:https://web.archive.org/web/2016050221 5459/https://stackoverflow.com/questions/1 2731222/is-it-possible-to-access-the-text- overlay-from-a-searchable-pdf * page 1 - page 1 * ----- | 6 | |
| A | US 2022/284724 A1 (SCHWIEBERT STEPHAN [AU] ET AL) 8 September 2022 (2022-09-08) * abstract * * paragraphs [0003] - [0005], [0008], [0028] - [0030], [0034], [0035], [0040] - [0042]; figure 1 * * paragraphs [0085] - [0126]; figures 4,9 * * paragraphs [0187] - [0194]; figure 10 * * paragraphs [0198] - [0199]; figure 12 * * paragraphs [0207] - [0212]; figure 14 * ----- | 7-17 | |
| A | US 2018/217973 A1 (GOPALAKRISHNAN SAINARAYANAN [IN] ET AL) 2 August 2018 (2018-08-02) * paragraph [0069]; figure 3G * ----- | 6 | TECHNICAL FIELDS SEARCHED (IPC) |
| A | Ivo Vynckier: "Let's Take Things Step by Step, Shall We? \| How OCR Works", , 25 January 2024 (2024-01-25), XP093281124, Retrieved from the Internet: URL:https://web.archive.org/web/2024012505 3744/https://how-ocr-works.com/OCR/OCR.htm l * the whole document * -/-- | 7-17 | |

The present search report has been drawn up for all claims

| Place of search | Date of completion of the search | Examiner |
|---|---|---|
| Berlin | 26 May 2025 | Chéron, Laurent |

EPO FORM 1503 03.82 (P04C01)

**EUROPEAN SEARCH REPORT**

**Application Number**

**EP 24 22 0543**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | -& Ivo Vynckier: "What Gets Read And What Doesn't \| How OCR Works", , 26 February 2024 (2024-02-26), XP093281127, Retrieved from the Internet: URL:https://web.archive.org/web/2024022603 0221/https://www.how-ocr-works.com/OCR/pag e-analysis.html * the whole document * | 7-17 | |
| A | -& Ivo Vynckier: "Segmenting Words and Characters \| How OCR Works", , 5 August 2023 (2023-08-05), XP093281130, Retrieved from the Internet: URL:https://web.archive.org/web/2023080500 1209/https://how-ocr-works.com/OCR/word-ch aracter-segmentation.html * the whole document * | 7-17 | |
| A | -& Ivo Vynckier: "Lines, Lineskew And Drop Letters \| How OCR Works", , 5 August 2023 (2023-08-05), XP093281135, Retrieved from the Internet: URL:https://web.archive.org/web/2023080500 0429/https://how-ocr-works.com/OCR/line-se gmentation.html * the whole document * | 7-17 | **TECHNICAL FIELDS SEARCHED (IPC)** |

-----

The present search report has been drawn up for all claims

| Place of search | Date of completion of the search | Examiner |
|---|---|---|
| Berlin | 26 May 2025 | Chéron, Laurent |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.................................................................................................
& : member of the same patent family, corresponding
    document

EPO FORM 1503 03.82 (P04C01)

page 3 of 3

## ANNEX TO THE EUROPEAN SEARCH REPORT
## ON EUROPEAN PATENT APPLICATION NO.

EP 24 22 0543

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2025

| Patent document cited in search report | | Publication date | Patent family member(s) | | Publication date |
|---|---|---|---|---|---|
| CN 102968407 | A | 13-03-2013 | NONE | | |
| US 2022284724 | A1 | 08-09-2022 | AU | 2021201345 A1 | 22-09-2022 |
| | | | CN | 114998921 A | 02-09-2022 |
| | | | EP | 4053731 A1 | 07-09-2022 |
| | | | US | 2022284724 A1 | 08-09-2022 |
| US 2018217973 | A1 | 02-08-2018 | NONE | | |

EPO FORM P0459

For more details about this annex : see Official Journal of the European Patent Office, No. 12/82